# EUROPEAN PATENT SPECIFICATION

(11) **EP 2 455 677 B1**
(45) Date of publication and mention of the grant of the patent: **29.07.2015**
(21) Application number: 10799691.0
(22) Date of filing: 07.06.2010
(51) Int. Cl.: F24F 11/00, G05B 15/02, G06F 13/00

(54) **AIR-CONDITIONING CONTROL MONITORING DEVICE AND AIR-CONDITIONING CONTROL MONITORING SYSTEM**
VORRICHTUNG ZUR ÜBERWACHUNG EINER KLIMAANLAGENSTEUERUNG UND SYSTEM ZUR ÜBERWACHUNG EINER KLIMAANLAGENSTEUERUNG
DISPOSITIF DE SURVEILLANCE DE COMMANDE DE CLIMATISATION ET SYSTÈME DE SURVEILLANCE DE COMMANDE DE CLIMATISATION

(30) Priority: 15.07.2009 JP 2009166771
(43) Date of publication of application: 23.05.2012
(73) Proprietor: Mitsubishi Heavy Industries, Ltd., Tokyo 108-8215 (JP)
(72) Inventor: SATO, Tomotaka, Tokyo 108-8215 (JP); NINAGAWA, Chuzo, Tokyo 108-8215 (JP)
(74) Representative: Intès, Didier Gérard André
(86) International application number: PCT/JP2010/059611
(87) International publication number: WO 2011/007629

(56) References cited:
- EP-A2- 2 012 288
- JP-A- 2004 029 904
- JP-A- 2005 308 278
- JP-A- 2005 308 278
- JP-A- 2006 337 021
- JP-A- 2006 337 021
- JP-A- 2008 017 494
- JP-A- 2008 017 494

## Description

### {Technical Field}

The present invention relates to an air-conditioning control and monitoring apparatus and to an air-conditioning control and monitoring system.

### {Background Art}

In a conventional air-conditioning monitoring system for centralized control of a plurality of air-conditioning devices installed in a building, management data, such as the operating statuses, of the air-conditioning devices to be managed is collated in an air-conditioning control and monitoring apparatus. In addition, management data for each air-conditioning device is reported to a monitoring terminal located at a site remote from the air-conditioning control and monitoring apparatus, which is connected thereto via a network such as a LAN or public switched network, and the operating statuses of the air-conditioning devices are monitored by the monitoring terminal.

### {Citation List}

### {Patent Literature}

{PTL 1} Japanese Unexamined Patent Application, Publication No. 2004-29904 {Summary of Invention}

### {Technical Problem}

When the air-conditioning control and monitoring apparatus detects that a fault occurs in the operating status of an air-conditioning device being monitored, data reporting that fault is transmitted to the monitoring terminal etc. at a remote site, thereby informing monitoring personnel that there is a fault in the air-conditioning device. However, IP networks, such as the Internet or a LAN, used as the network connecting the air-conditioning control and monitoring apparatus and the monitoring terminal perform communication on a best effort basis, and arrival of the transmitted data and the communication quality are not guaranteed. In other words, in an environment where best-effort communication is used, if a network fault or malfunction occurs, in some cases the data reported from the air-conditioning control and monitoring apparatus cannot be correctly received or displayed at the monitoring terminal.

In such an event, in the related art, a special application for detecting a malfunction etc. in network communication is pre-installed in the monitoring terminal, or a special application is downloaded into the monitoring terminal from the air-conditioning control and monitoring apparatus, and a communication malfunction between the air-conditioning control and monitoring apparatus and the monitoring terminal is detected with these special applications (for example, see Patent Literature 1). In addition, when a malfunction is detected with these special applications, acquisition of the data to be monitored is performed again.

EP 2012288 discloses an air conditioning system according to the preamble of appending claim 1.

However, after air-conditioning monitoring system are introduced, there have been requests for making maintenance unnecessary, and therefore, there is a demand for monitoring air-conditioning monitoring systems without using a special air-conditioning monitoring system application that depends on the OS version etc. of the monitoring terminal. Also, when a network malfunction occurs and an error is detected on the monitoring screen, there is a demand to recover from this error status and resume normal status.

The present invention has been conceived to solve the above problems, and an object thereof is to provide an air-conditioning control and monitoring apparatus and an air-conditioning control and monitoring system that make maintenance unnecessary and that can monitor an air-conditioning monitoring system without using a special application.

### {Solution to Problem}

In order to solve the problem described above, the present invention employs the following solutions.

A first aspect of the present invention is an air-conditioning control and monitoring apparatus that performs operating control of a plurality of air-conditioning devices installed in a building according to instructions transmitted from a client terminal via a web browser, that monitors the operating statuses of the air-conditioning devices, and that provides operating status information, which is information about the operating statuses of the air-conditioning devices, to the client terminal, the air-conditioning control and monitoring apparatus including storage means for dividing a window related to the operating statuses of the air-conditioning devices, displayed on the client terminal, into a plurality of regions and for storing, for each region, information to be displayed in each region and a data file in which a refresh period for the displayed information is written; and first communication means for reading out the data files for all regions constituting the window from the storage means when a display request for the window is received from the client terminal and transmitting the data files to the client terminal, wherein one of the plurality of data files constituting the window contains assessment information for assessing whether another data file can be correctly received at the client terminal, and the data file containing the assessment information is not refreshed, or the refresh period thereof is set to be longer than the refresh period of the data file to be assessed.

According to this configuration, an instruction is transmitted to the air-conditioning control and monitoring apparatus from the client terminal via the web browser, and the air-conditioning control and monitoring apparatus performs operating control of the plurality of air-conditioning devices installed in the building on the basis of this instruction. Also, the air-conditioning control and monitoring apparatus monitors the operating statuses of the air-conditioning devices and provides the operating status information to the client terminal. When the window related to the operating statuses of the air-conditioning devices, displayed on the client terminal, is divided into a plurality of regions, the information to be displayed in each region and the data file in which the refresh period of that display information is written are stored for each region in the storage means of the air-conditioning control and monitoring apparatus. When the air-conditioning control and monitoring apparatus receives a window display request from the client terminal, the data files for all regions constituting the window are read out from the storage means and are transmitted to the client terminal via the first communication means.

At the client terminal, by processing these data files with the web browser, the information written in each data file is displayed in the corresponding region in a single window. Because assessment information for assessing whether the other data files have been correctly received is contained in one of these data files constituting the window, by processing this data file, it is assessed whether the other data files are correctly received.

A refresh period is written in the data files to be assessed. Also, the data file containing the assessment information need not be refreshed; if a refresh period is set, it is preferably set to be longer than the refresh period of the data file to be assessed.

If a refresh period is written in the data file, a display request for each data file is transmitted to the air-conditioning control and monitoring apparatus from the web browser at this refresh period, and the data file corresponding to the display request is sent from the air-conditioning control and monitoring apparatus to the client terminal. Accordingly, each region in the window is refreshed at a prescribed frequency.

Because the assessment information is contained in a data file constituting the window in this way, at the client terminal, it is possible to perform the assessment as to whether the data is correctly received just by having the web browser perform its normal functions. Accordingly, it is not necessary to download a separate program or to pre-install a program in the client terminal, as was required in the related art; it suffices to provide a web browser, such as Internet Explorer (registered trademark) or Netscape (registered trademark), in the client terminal.

The assessment information contained in the data file of the air-conditioning control and monitoring apparatus may be a program for assessing whether a prescribed character string contained in the data file to be assessed is detected.

For example, a prescribed character string is contained at the end of the data file to be assessed, and it is assessed whether this prescribed character string is detected at the end by the assessment information program. If the prescribed character string is detected, it is considered that the information up to the end of the data file to be assessed is received at the client terminal. By performing such an assessment, it is possible to assess, in a simple manner, whether the data file to be assessed is correctly received at the client terminal.

When the above-described assessment information assesses that the data file to be assessed is not correctly received at the client terminal, a reacquisition request for the data file to be assessed may be transmitted.

For example, even if there is a temporary fault in the network connection between the client terminal and the air-conditioning control and monitoring apparatus, and the data file to be assessed cannot be correctly received, a reacquisition request for the data file to be assessed is performed. Accordingly, the client terminal can repeat acquisition of the data file to be assessed.

The assessment information of the air-conditioning control and monitoring apparatus may assess, at first time intervals defining timing at which the assessment is performed, whether the data file to be assessed is correctly received at the client terminal and if, as a result, it is assessed that the data file to be assessed is not correctly received at the client terminal, may conduct the assessment at second time intervals shorter than the first time intervals.

Accordingly, in situations where, for example, there is no particular problem in the network connection etc. between the client terminal and the air-conditioning control and monitoring apparatus, but it takes some time to receive the data file to be assessed, it is possible to repeat the assessment at increased frequency. Thus, rather than detecting a reception fault in a single assessment, when it is assessed that the data file is not correctly received, assessment is performed after changing the assessment period, and therefore it is possible to reduce the frequency at which reacquisition requests for the data file to be assessed are transmitted.

If, as a result of the assessment in the air-conditioning control and monitoring apparatus, it is assessed that the data file is not correctly received at the client terminal after a prescribed period has passed from when it is assessed that the data file to be assessed is not correctly received at the client terminal, an error may be reported to the client terminal.

For example, if the network (physical connection) between the client terminal and the air-conditioning control and monitoring apparatus is disconnected, even if reacquisition of the data file is repeated, it is not possible for the client terminal to receive the correct data file. Therefore, if the state where the data file has not been received at the client terminal persists even after a prescribed period has elapsed after it is assessed that the data file has not been correctly received at the client terminal, an error is reported to the client terminal. By doing so, because it is possible to prevent the client terminal from endlessly transmitting reacquisition requests, the consumption of resources in the CPU etc. of the client terminal can be reduced.

A second aspect of the present invention is an air-conditioning control and monitoring system including any one of the above-described air-conditioning control and monitoring apparatuses; and a client terminal provided with a web browser that is connected to the air-conditioning control and monitoring apparatus via a network.

A third aspect of the present invention is an air-conditioning control and monitoring method that performs operating control of a plurality of air-conditioning devices installed in a building according to instructions transmitted from a client terminal via a web browser, that monitors the operating statuses of the air-conditioning devices, and that provides operating status information, which is information about the operating statuses of the air-conditioning devices, to the client terminal, the air-conditioning control and monitoring method including dividing a window related to the operating statuses of the air-conditioning devices, displayed on the client terminal, into a plurality of regions and storing, for each region, information to be displayed in that region and a data file in which a refresh period for the displayed information is written; and transmitting, to the client terminal, the data files for all regions constituting the window when a display request for the window is received from the client terminal, wherein one of the plurality of data files contains assessment information for assessing whether another data file can be correctly received at the client terminal, and the data file containing the assessment information is not refreshed, or the refresh period thereof is set to be longer than the refresh period of the data file to be assessed.

### {Advantageous Effects of Invention}

The present invention affords an advantage in that maintenance is made unnecessary and an air-conditioning monitoring system can be monitored without using a special application.

### {Brief Description of Drawings}

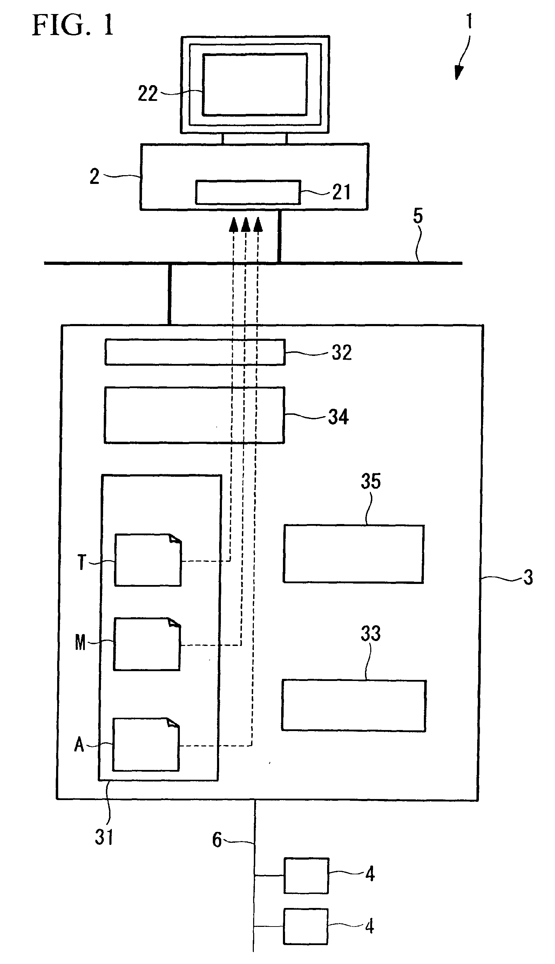

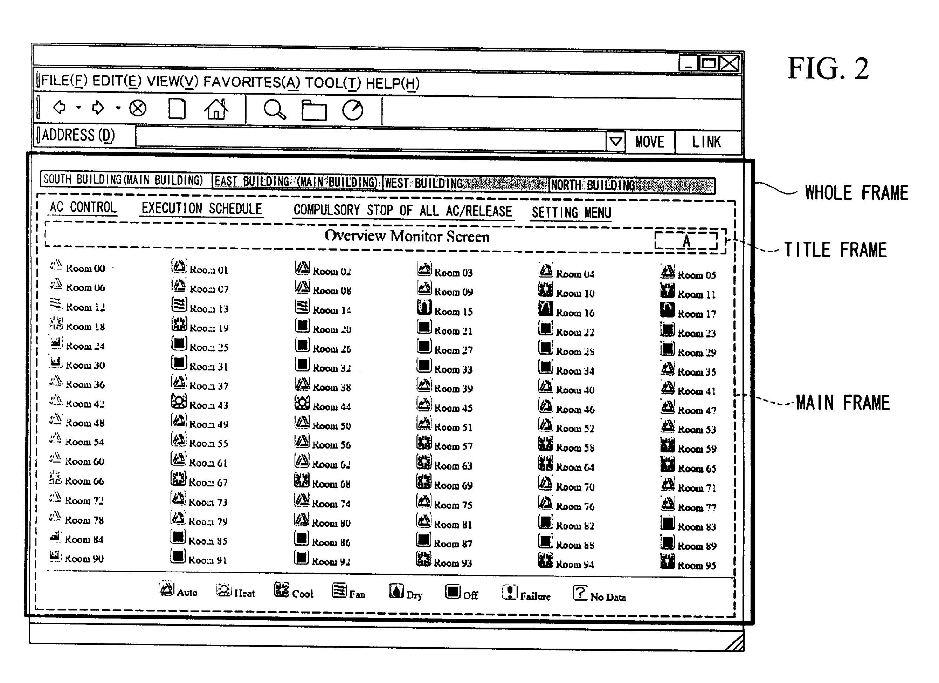

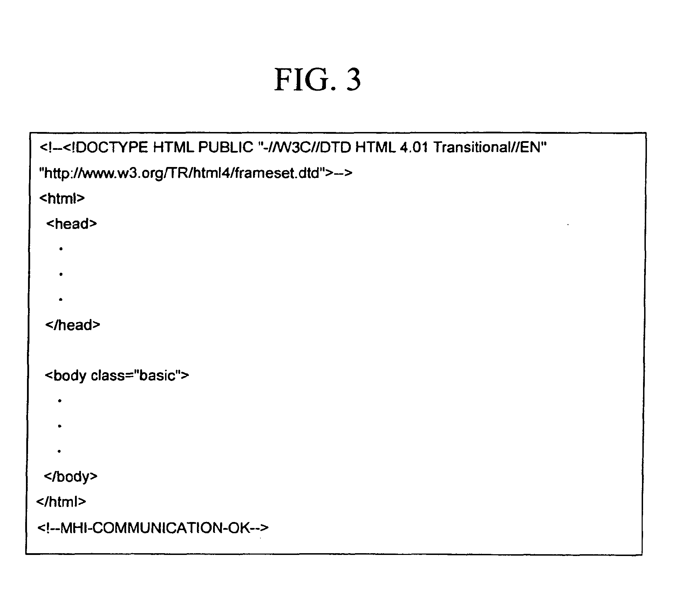

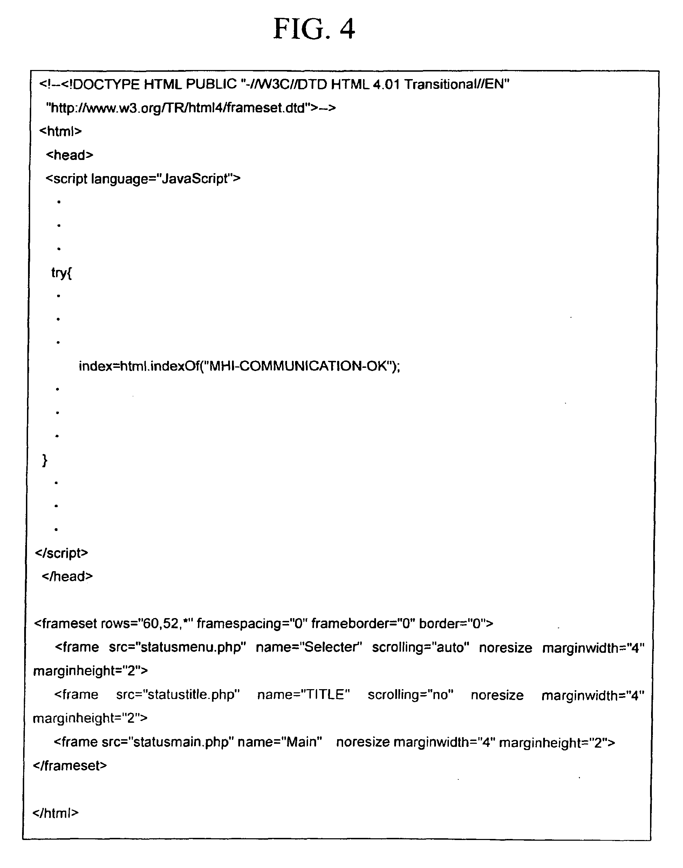

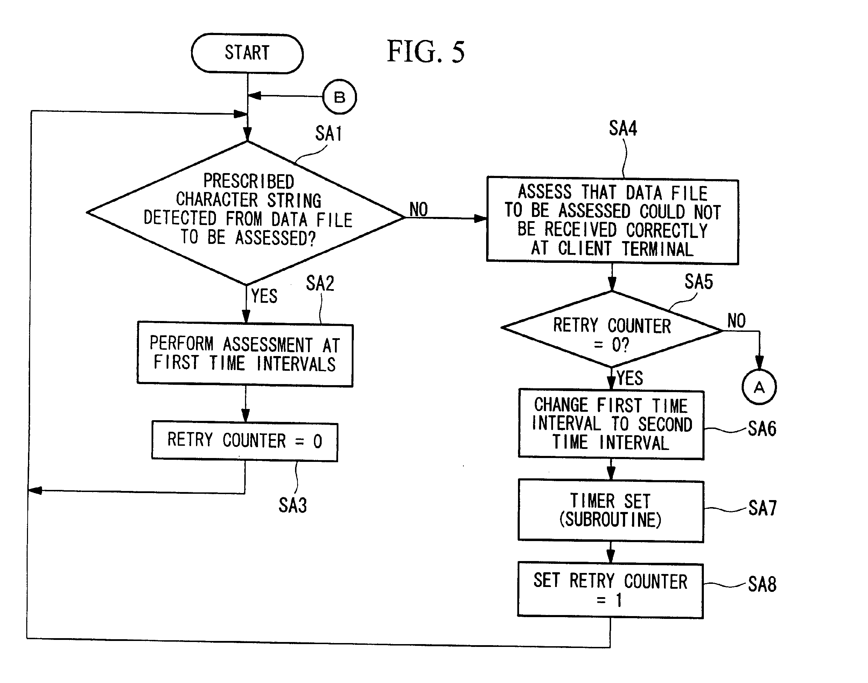

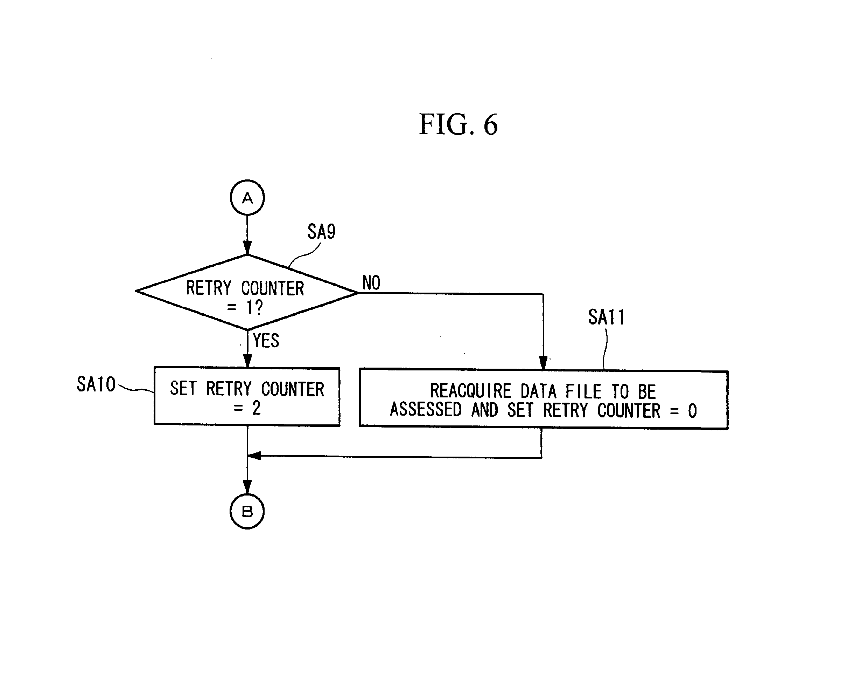

{Fig. 1} Fig. 1 is a block diagram showing, in outline, an example configuration of an air-conditioning control and monitoring system according to an embodiment of the present invention.
{Fig. 2} Fig. 2 is a diagram showing an example of a window displaying operating status information of an air-conditioning control and monitoring apparatus, from a web browser.
{Fig. 3} Fig. 3 is a diagram showing an example in which a title frame data file is displayed.
{Fig. 4} Fig. 4 is a diagram showing an example in which a main frame data file is displayed.
{Fig. 5} Fig. 5 is a diagram showing the operation flow of an air-conditioning control and monitoring method according to an embodiment of the present invention.
{Fig. 6} Fig. 6 is a diagram showing a continuation of the operation flow in Fig. 5.

### {Description of Embodiments}

An embodiment of an air-conditioning control and monitoring apparatus and an air-conditioning control and monitoring system according to the present invention will be described below with reference to the drawings.

Fig. 1 is a block diagram showing, in outline, the configuration of an air-conditioning control and monitoring system 1 according to this embodiment.

As shown in Fig. 1, the air-conditioning control and monitoring system 1 is mainly configured of a client terminal 2 with a built-in web browser (WEB browser) 22, and an air-conditioning control and monitoring apparatus 3 that monitors the operating statuses of air-conditioning devices (hereinafter referred to as "air conditioners") 4 at prescribed time intervals and reports the operating statuses of the air conditioners 4 in response to a request from the client terminal 2. In this embodiment, a description is given assuming that there is one air-conditioning control and monitoring apparatus 3; however, the number of air-conditioning control and monitoring apparatuses 3 is not restricted thereto. There may be a plurality of air-conditioning control and monitoring apparatuses 3, and there is no particular upper limit to the number thereof.

The client terminal 2 and the air-conditioning control and monitoring apparatus 3 are connected via a building-management communication network 5. The building-management communication network 5 is a network using a standard communication protocol (for example, TCP/IP), for instance, the Internet.

The air-conditioning control and monitoring apparatus 3 is provided with a plurality of air conditioners 4 under its control, and the air-conditioning control and monitoring apparatus 3 is connected to each air conditioner 4 via an air-conditioning control network 6. The air-conditioning control network 6 is, for example, a network using a special communication protocol developed for controlling and monitoring the air conditioners 4.

As shown in Fig. 1, the air-conditioning control and monitoring apparatus 3 includes a storage unit (storage means) 31, a first communication unit (first communication means) 32, an air-conditioning control and communication unit 33, a web server 34, and an operating status information database 35.

The air-conditioning control and communication unit 33 is individually connected with the plurality of air conditioners 4 via the air-conditioning control network 6. The air-conditioning control and communication unit 33 collects operating status information, which is information about the operating statuses of the air conditioners 4, from each air conditioner 4 and outputs the information to the operating status information database 35.

The operating status information database 35 stores the operating status information of each air conditioner 4 received via the air-conditioning control and communication unit 33, and the operating status information is read out from the WEB server 34.

The storage unit 31 stores data files (details given below) for displaying a window related to the operating status information of the air conditioners 4 on the client terminal 2.

Upon receiving an operating status information display request from the client terminal 2, the WEB server 34 reads out the operating status information from the operating status information database 35. Also, the WEB server 34 reads out from the storage unit 31 the data files for displaying this operating status information on the web browser 22 in the client terminal 2 and transmits the data files, together with the operating status information, to the client terminal 2 via the first communication unit 32.

Now, the data files stored in the storage unit 31 and the information displayed on the client terminal 2 according to the data files will be described below.

When the window related to the operating statuses of the air conditioners 4, which is displayed on the client terminal 2, is split into a plurality of regions, for each region, the information to be displayed in that region is written in the data file stored in the storage unit 31. Also, refresh periods for that display information are written in data files for which it is necessary to refresh the display information.

In this embodiment, the window displaying the operating status information is split into three regions, and these regions are called "frames". The three regions are defined as, for example, a whole frame, a title frame, and a main frame, and data for displaying each frame on the web browser 22 in the client terminal 2 constitutes the data files.

The storage unit 31 stores respective data files for displaying the individual regions of the title frame, the main frame, and the whole frame on the web browser 22 in the client terminal 2.

Fig. 2 shows an example of the window in the case where the air-conditioning control and monitoring apparatus 3 is monitored via the web browser 22 on the client terminal 2. More specifically, the air-conditioning control and monitoring apparatus 3, which is installed in the South Building (Main Building), is accessed from the client terminal 2, and the operating status information of each air conditioner 4 which the South Building air-conditioning control and monitoring apparatus 3 is monitoring is displayed.

The title frame is a region which displays the title of the screen being displayed (for example, "Overview Monitor Screen" in Fig. 2) on the web browser 22. If a fault occurs in an air conditioner 4, a buzzer stop switch is displayed. For example, the buzzer stop switch is displayed in region A shown in Fig. 2.

The main frame is a region which displays on the web browser 22 the operating status information of the air conditioners 4 under control by the air-conditioning control and monitoring apparatus 3 selected in the title frame.

The whole frame is a region forming a combined screen for displaying the title frame and the main frame on the web browser 22 in the client terminal 2.

In this embodiment, one of the plurality of data files described above contains assessment information for assessing whether the other data files have been correctly received at the client terminal 2. In this embodiment, the data file containing the assessment information is called an assessment data file, and the data file for the whole frame described above functions as this assessment data file.

In this embodiment, time settings for refreshing the display screen on the web browser 22 at prescribed time intervals, when displayed on the web browser, are written in the data files other than the assessment data file, that is, the individual data files corresponding to the main frame and the title frame, and no refresh period is set in the data file for the whole frame, which is the assessment data file. Therefore, when, for example, the main frame and the title frame are displayed on the web browser 22, reacquisition of the corresponding data files is performed by the client terminal 2 at the timing of the refresh periods respectively defined in the data files for the main frame and the title frame, whereas for the whole frame, where no refresh period is set, refresh acquisition of the data file is not performed.

A prescribed character string is written in the data files to be assessed. In the case where the client terminal 2 displays the data files on the web browser 22, the prescribed character string, which is a character string that does not have to be displayed on the web browser 22, should be a character string that is recognized using the above-described assessment information. An example of the prescribed character string is "MHI-COMMUNICATION-OK", which is written as comment text after the html end tag in the data files to be assessed (see Fig. 3). This character string, since it is written as comment text, is not displayed on the web browser 22 in the client terminal 2.

The assessment information in the assessment data file is set with a program. For example, the program is a Java (registered trademark) script.

Fig. 4 is a diagram showing an example of the assessment data file; in this embodiment, the data file for the whole frame (hereinafter referred to a "data file A") serves as the assessment data file. As shown in Fig. 4, the assessment information is written in the form of a Java (registered trademark) script, in the header part inside the html tags, that assesses whether or not the prescribed character string "MHI-COMMUNICATION-OK" is contained in the data file to be assessed.

Thus, the data files to be assessed are assessed using the assessment information in the assessment data file, and if, as a result of this assessment, the prescribed character string is detected in the client terminal 2 from the data files to be assessed, the other data files are assessed to have been received correctly. If the prescribed character string is not detected, it is assessed that the data files to be assessed have not been received correctly.

When it is assessed that the data files to be assessed have not been received correctly, a request for reacquiring the data files that have not been received correctly should be sent. More specifically, if there is a data file that has not been received correctly at the client terminal 2, the assessment information written in the assessment data file is that a reacquisition request for the data file that has not been received correctly be sent to the WEB server 34. By doing so, the client terminal 2 can repeat acquisition of the data file to be assessed.

The above-described assessment is performed at first time intervals, and if it is assessed that the data file to be assessed has not been received correctly at the client terminal 2, the time interval is changed to a second time interval shorter than the first time interval, and then the assessment is performed. For example, in a situation where there is no particular problem with the network connection etc. in the second communication unit 21 of the client terminal but it takes some time to receive the data file to be assessed, the assessment is repeated at increased frequency. In this way, when it is assessed that the data file has not been correctly received, assessment is performed after changing the assessment interval rather than detecting a reception fault in a single assessment; therefore, it is possible to reduce the frequency at which reacquisition requests for the data files to be assessed are transmitted.

If it is assessed, as a result of the above assessment, that the data file to be assessed has not been received correctly at the client terminal 2, even after a prescribed period has elapsed since it was assessed that the data file to be assessed has not been received correctly at the client terminal 2, error notification may be performed in the client terminal 2. By performing error notification after the prescribed period has elapsed in this way, it is possible to prevent unnecessary repetition of reacquisition requests from the client terminal 2 to the WEB server.

The error notification method is not particularly limited. For example, on the client terminal 2, a buzzer sound may be emitted or a pop-up screen may be displayed; on the web browser 22, a buzzer button may be displayed; and so forth.

Next, the operation of the air-conditioning control and monitoring system 1 provided with the above configuration will be described using Figs. 5 and 6.

The web browser 22 on the client terminal 2 is operated by monitoring personnel, and when the address of the air-conditioning control and monitoring apparatus 3 located in the South Building is input in the web browser 22, a request for displaying the operating status information is transmitted from the second communication unit 21 in the client terminal 2 to the first communication unit 32 in the air-conditioning control and monitoring apparatus 3 in the South Building. The web server 34 in the air-conditioning control and monitoring apparatus 3, which has received the display request for the operating status information, reads out the operating status information of the air conditioners 4 under its control from the operating status information database 35.

In addition, all data files constituting the window for displaying this operating status information on the web browser on the client terminal 2 are read out from the storage unit 31. For example, three data files, that is, data file A for the whole frame (statusall.php), data file T for the title frame (statustitle.php), and data file M for the main frame (statusmain.php), are read out from the storage unit 31. Here, the assessment information is written in data file A, which is the assessment data file, and the prescribed character string "MHI-COMMUNICATION-OK" is written in the other data files, that is, data file T and data file M. Also, refresh periods are set in data file T and data file M, whereas data file A does not require a refresh because it is the whole frame, and thus no refresh period is written therein.

The individual data files A, T, and M and the operating status information that have been read out are sent by the web server 34 to the client terminal 2 via the first communication unit 32. Once the transmitted data files A, T, and M and the operating status information are received by the second communication unit 21 in the client terminal 2, they are processed in the client terminal 2 and are displayed on the web browser 22 on the client terminal 2. Once these data files A, T, and M have been processed, they are displayed on the web browser on the client terminal 2 as shown in Fig. 2.

In the web browser 22 on the client terminal 2, data file A, which is the assessment data file, and the other data files (data files to be assessed) T and M are loaded, and the Java (registered trademark) script written in the header portion in data file A is executed. In the client terminal 2, the Java (registered trademark) script in data file A assesses whether the prescribed character string "MHI-COMMUNICATION-OK" is written in the data files T and M to be assessed (step SA1 in Fig. 5).

If, as a result of the assessment in step SA1 in Fig. 5, it is detected that the prescribed character string is written in data files T and M to be assessed ("Yes" at step SA1 in Fig. 5), the timing at which the assessment is repeated is kept at the first time interval (for example, every 60 seconds) (step SA2 in Fig. 5), a retry counter in which the number of repetitions of the assessment is set remains at 0 (step SA3 in Fig. 5), and the assessment is repeated.

If, as a result of the assessment in step SA1 in Fig. 5, it cannot be detected that the prescribed character string is written in the data files to be assessed ("No" at step SA1 in Fig. 5), it is assessed that the data files to be assessed could not be received correctly at the client terminal 2 (step SA4 in Fig. 5). Then, it is determined whether the retry counter is 0, and if it is 0 ("Yes" at step SA5 in Fig. 5), the first time interval is changed to the second time interval (for example, every 5 seconds) (step SA6 in Fig. 5). Next, a subroutine that starts a timer for measuring the period from when it is assessed that the prescribed character string could not be detected is launched (step SA7 in Fig. 5), and the retry counter is set from 0 to 1 (step SA8 in Fig. 5). Note that a period until error notification is performed in the client terminal 2 (for example, 600 seconds) is set in the timer by the above-described subroutine.

The assessment is performed again after 5 seconds (step SA1 in Fig. 5), which is the second time interval set in step SA6 in Fig. 5, and if the prescribed character string is not detected the next time also, it is determined whether the retry counter is 0 (step SA5 in Fig. 5). If the retry counter is not zero ("No" at step SA5 in Fig. 5), next it is determined whether the retry counter is 1 (step SA9 in Fig. 6). If the retry counter is 1 ("Yes" at step SA9 in Fig. 6), the retry counter is changed from 1 to 2, and the assessment is repeated at the second time interval (step SA10 in Fig. 6).

If, as a result of repeating the assessment at the second time interval, the retry counter is not 1 ("No" at step SA9 in Fig. 6), a reacquisition request for reacquiring the data files T and M to be assessed is transmitted from the client terminal 2 to the air-conditioning control and monitoring apparatus 3. Also, after the retry counter is set to 0, the process returns to step SA1 in Fig. 5, where the assessment is repeated (step SA11 in Fig. 6).

If the prescribed character string has not been detected even after 600 seconds has elapsed in the timer, which is set in step SA7 in Fig. 5, error notification processing defined in a subroutine is executed, and an error reporting that the data files could not be received correctly at the client terminal 2 is issued.

As described above, with the air-conditioning control and monitoring apparatus 3 and the air-conditioning control and monitoring system 1 according to the present invention, by processing these data files in the web browser 22 on the client terminal 2, the information written in each data file is displayed in respective regions in a single window. Also, because one of the files constituting the window contains assessment information for assessing whether the other data files have been received correctly, by processing that data file, it is assessed whether the other data files have been received correctly.

In addition, because assessment information is contained in a data file constituting the window in this way, in the client terminal 2, it is possible to perform assessment as to whether the data has been received correctly, just by having the web browser 22 perform its normal functions. Thus, it is not necessary to download a separate program or to pre-install a program in the client terminal 2, as is required conventionally; it suffices to provide a web browser 22 such as Internet Explorer (registered trademark) or the like in the client terminal 2, making it possible to assess, in a simple manner, whether the client terminal 2 has correctly received the data.

### [Modification]

The air-conditioning control and monitoring apparatus 3 and the air-conditioning control and monitoring system 1 of this embodiment have been described assuming that a refresh period is not set in the assessment data file; however, it is not limited thereto, and a refresh period may be set in the assessment data file. If a refresh period is set in the data file, a refresh period longer than the refresh periods for the data files to be assessed is preferably set.

The reason for setting the refresh period in this way is so that, although the assessment is executed the instant the data files are read into the web browser 22, if the refresh period in the assessment data file is shorter than the refresh period of the data files to be assessed, the assessment data file assesses the same data file to be assessed multiple times, resulting in wasteful assessment, and this waste should thus be reduced.

In the case where the window is divided into a plurality of regions, although the window is divided into three regions in this embodiment, it is not limited thereto. No particular upper limit is set for the number of divided regions.

Although an embodiment of the present invention have been described above with reference to the drawings, the particular configuration is not limited to this embodiment, and design modifications that do not depart from the scope of the appending claims are also encompassed.

### {Reference Signs List}

- 1: air-conditioning control and monitoring system
- 2: client terminal
- 3: air-conditioning control and monitoring apparatus
- 21: second communication unit
- 22: web browser
- 31: storage unit
- 32: first communication unit
- 33: air-conditioning control and communication unit
- 34: web server
- 35: operating status information database

## Claims

1. An air-conditioning control and monitoring apparatus (3) that performs operating control of a plurality of air-conditioning devices(4) installed in a building according to instructions transmitted from a client terminal (2) via a web browser (22), that monitors the operating statuses of the air-conditioning devices (4), and that provides operating status information, which is information about the operating statuses of the air-conditioning devices (4), to the client terminal (2), the air-conditioning control and monitoring apparatus (3) being **characterized in that** it comprises:
storage means (31) for dividing a window related to the operating statuses of the air-conditioning devices (4), displayed on the client terminal (2), into a plurality of regions and for storing, for each region, information to be displayed in each region and a data file in which a refresh period for the displayed information is written; and
first communication means (32) for reading out the data files for all regions constituting the window from the storage means (31) when a display request for the window is received from the client terminal (2) and transmitting the data files to the client terminal (2),
wherein one of the plurality of data files constituting the window contains assessment information for assessing whether another data file can be correctly received at the client terminal (2), and
the data file containing the assessment information is not refreshed, or the refresh period thereof is set to be longer than the refresh period of the data file to be assessed.

2. An air-conditioning control and monitoring apparatus (3) according to Claim 1, wherein the assessment information contained in the data file is a program for assessing whether a prescribed character string contained in the data file to be assessed is detected.

3. An air-conditioning control and monitoring apparatus (3) according to Claim 1 or Claim 2, wherein when the assessment information assesses that the data file to be assessed is not correctly received at the client terminal (2), a reacquisition request for the data file to be assessed is transmitted.

4. An air-conditioning control and monitoring apparatus (3) according to one of Claims 1 to 3, wherein the assessment information assesses, at first time intervals defining timing at which the assessment is performed, whether the data file to be assessed is correctly received at the client terminal (2), and if, as a result, it is assessed that the data file to be assessed is not correctly received at the client terminal (2), conducts the assessment at second time intervals shorter than the first time intervals.

5. An air-conditioning control and monitoring apparatus (3) according to one of Claims 1 to 4, wherein if, as a result of the assessment, it is assessed that the data file is not correctly received at the client terminal (2) after a prescribed period has passed from when it is assessed that the data file to be assessed is not correctly received at the client terminal, an error is reported to the client terminal (2).

6. An air-conditioning control and monitoring system (1) **characterized in that** it comprises:
an air-conditioning control and monitoring apparatus (3) according to one of Claims 1 to 5; and
a client terminal (2) provided with a web browser (22) that is connected to the air-conditioning control and monitoring apparatus (3) via a network.

7. An air-conditioning control and monitoring method that performs operating control of a plurality of air-conditioning devices (4) according to any one of claims 1 to 6 installed in a building according to instructions transmitted from a client terminal (2) via a web browser, that monitors the operating statuses of the air-conditioning devices (4), and that provides operating status information, which is information about the operating statuses of the air-conditioning devices (4), to the client terminal (2), the air-conditioning control and monitoring method comprising:
dividing a window related to the operating statuses of the air-conditioning devices (4), displayed on the client terminal (2), into a plurality of regions and storing, for each region, information to be displayed in that region and a data file in which a refresh period for the displayed information is written; and
transmitting, to the client terminal (2), the data files for all regions constituting the window when a display request for the window is received from the client terminal (2),
wherein one of the plurality of data files contains assessment information for assessing whether another data file can be correctly received at the client terminal (2), and
the data file containing the assessment information is not refreshed, or the refresh period thereof is set to be longer than the refresh period of the data file to be assessed.

## Patentansprüche

1. Klimatisierungssteuerungs- und -überwachungsvorrichtung (3), die eine Betriebssteuerung mehrerer in einem Gebäude installierter Klimatisierungsgeräte (4) gemäß Instruktionen ausführt, die von einem Client-Endgerät (2) über einen Webbrowser (22) übertragen werden, die die Betriebsstatuszustände der Klimatisierungsgeräte (4) überwacht, und die Betriebsstatusinformationen, die Informationen über die Betriebsstatuszustände der Klimatisierungsgeräte (4) sind, an das Client-Endgerät (2) übermittelt, wobei die Klimatisierungssteuerungs- und -überwachungsvorrichtung (3) **dadurch gekennzeichnet ist, dass** sie umfasst:
ein Speichermittel (31) zum Teilen eines Fensters, das sich auf die Betriebsstatuszustände der Klimatisierungsgeräte (4) bezieht und das auf dem Client-Endgerät (2) angezeigt wird, in mehrere Regionen, und zum Speichern, für jede Region, von Informationen, die in jeder Region anzuzeigen sind, und einer Datei, in die ein Auffrischungszeitraum für die angezeigten Informationen geschrieben ist, und
ein erstes Kommunikationsmittel (32) zum Auslesen der Dateien für alle Regionen, die das Fenster bilden, aus dem Speichermittel (31), wenn eine Anzeigeanforderung für das Fenster von dem Client-Endgerät (2) empfangen wird, und Senden der Dateien an das Client-Endgerät (2),
wobei eine der mehreren Dateien, die das Fenster bilden, Einschätzungsinformationen enthält, um einzuschätzen, ob eine andere Datei korrekt in dem Client-Endgerät (2) empfangen werden kann, und
die Datei, die die Einschätzungsinformationen enthält, nicht aufgefrischt wird, oder ihr Auffrischungszeitraum so eingestellt wird, dass er länger als der Auffrischungszeitraum der einzuschätzenden Datei ist.

2. Klimatisierungssteuerungs- und -überwachungsvorrichtung (3) nach Anspruch 1, wobei die in der Datei enthaltenen Einschätzungsinformationen ein Programm zum Einschätzen sind, ob eine vorgeschriebene Zeichenkette, die in der Datei enthalten ist, detektiert wird.

3. Klimatisierungssteuerungs- und -überwachungsvorrichtung (3) nach Anspruch 1 oder Anspruch 2, wobei, wenn die Einschätzungsinformationen einschätzen, dass die einzuschätzende Datei nicht korrekt in dem Client-Endgerät (2) empfangen wurde, eine Empfangswiederholungsanforderung für die einzuschätzende Datei gesendet wird.

4. Klimatisierungssteuerungs- und -überwachungsvorrichtung (3) nach einem der Ansprüche 1 bis 3, wobei die Einschätzungsinformationen in ersten Zeitintervallen, die Zeiten definieren, zu denen die Einschätzung ausgeführt wird, einschätzen, ob die einzuschätzende Datei korrekt in dem Client-Endgerät (2) empfangen wurde, und falls im Ergebnis dessen eingeschätzt wird, dass die einzuschätzende Datei nicht korrekt in dem Client-Endgerät (2) empfangen wurde, die Einschätzung in zweiten Zeitintervallen vornimmt, die kürzer sind als die ersten Zeitintervalle.

5. Klimatisierungssteuerungs- und -überwachungsvorrichtung (3) nach einem der Ansprüche 1 bis 4, wobei, wenn im Ergebnis der Einschätzung eingeschätzt wird, dass die Datei nicht in dem Client-Endgerät (2) korrekt empfangen wurde, nachdem ein vorgeschriebener Zeitraum ab dem Zeitpunkt verstrichen ist, wo eingeschätzt wurde, dass die einzuschätzende Datei nicht korrekt in dem Client-Endgerät empfangen wurde, ein Fehler an das Client-Endgerät (2) gemeldet wird.

6. Klimatisierungssteuerungs- und -überwachungssystem (1), **dadurch gekennzeichnet, dass** es umfasst:
eine Klimatisierungssteuerungs- und -überwachungsvorrichtung (3) nach einem der Ansprüche 1 bis 5, und
ein Client-Endgerät (2), das mit einem Webbrowser (22) ausgestattet ist und mit dem Klimatisierungssteuerungs- und -überwachungsvorrichtung (3) über ein Netzwerk verbunden ist.

7. Klimatisierungssteuerungs- und -überwachungsverfahren, das eine Betriebssteuerung mehrerer in einem Gebäude installierter Klimatisierungsgeräte (4) nach einem der Ansprüche 1 bis 6 gemäß Instruktionen ausführt, die von einem Client-Endgerät (2) über einen Webbrowser übertragen werden, das die Betriebsstatuszustände der Klimatisierungsgeräte (4) überwacht, und das Betriebsstatusinformationen, die Informationen über die Betriebsstatuszustände der Klimatisierungsgeräte (4) sind, an das Client-Endgerät (2) übermittelt, wobei das Klimatisierungssteuerungs- und -überwachungsverfahren umfasst:
Teilen eines Fensters, das sich auf die Betriebsstatuszustände der Klimatisierungsgeräte (4) bezieht und das auf dem Client-Endgerät (2) angezeigt wird, in mehrere Regionen, und Speichern, für jede Region, von Informationen, die in dieser Region anzuzeigen sind, und einer Datei, in die ein Auffrischungszeitraum für die angezeigten Informationen geschrieben ist, und
Senden, an das Client-Endgerät (2), der Dateien für alle Regionen, die das Fenster bilden, wenn eine Anzeigeanforderung für das Fenster von dem Client-Endgerät (2) empfangen wird,
wobei eine der mehreren Dateien Einschätzungsinformationen enthält, um einzuschätzen, ob eine andere Datei korrekt in dem Client-Endgerät (2) empfangen werden kann, und
die Datei, die die Einschätzungsinformationen enthält, nicht aufgefrischt wird, oder ihr Auffrischungszeitraum so eingestellt wird, dass er länger als der Auffrischungszeitraum der einzuschätzenden Datei ist.

## Revendications

1. Appareil de commande et de surveillance de climatisation (3) qui réalise une commande de fonctionnement d'une pluralité de dispositifs de climatisation (4) installés dans un bâtiment en fonction d'instructions transmises depuis un terminal client (2) par l'intermédiaire d'un navigateur (22), qui surveille les états de fonctionnement des dispositifs de climatisation (4), et qui fournit une information d'état de fonctionnement, qui est une information concernant les états de fonctionnement des dispositifs de climatisation (4), au terminal client (2), l'appareil de commande et de surveillance de climatisation (3) étant **caractérisé en ce qu'**il comporte :
des moyens de stockage (31) destinés à diviser une fenêtre liée aux états de fonctionnement des dispositifs de climatisation (4), affichés sur le terminal client (2), en une pluralité de zones et destinés à stocker, pour chaque zone, une information devant être affichée dans chaque zone et un fichier de données dans lequel une période de rafraîchissement pour l'information affichée est écrite ; et
des premiers moyens de communication (32) destinés à lire les fichiers de données pour toutes les zones constituant la fenêtre dans les moyens de stockage (31) quand une demande d'affichage de la fenêtre est reçue du terminal client (2) et à transmettre les fichiers de données au terminal client (2),
dans lequel un de la pluralité de fichiers de données constituant la fenêtre contient de l'information d'estimation destinée à estimer si un autre fichier de données peut être correctement reçu sur le terminal client (2), et
le fichier de données contenant l'information d'estimation n'est pas rafraichi, ou bien sa période de rafraichissement est prévue pour être plus longue que la période de rafraichissement du fichier de données devant être estimé.

2. Appareil de commande et de surveillance de climatisation (3) selon la revendication 1, dans lequel l'information d'estimation contenue dans le fichier de données est un programme destiné à estimer si une chaîne de caractères prescrite contenue dans le fichier de données devant être estimé est détectée.

3. Appareil de commande et de surveillance de climatisation (3) selon la revendication 1 ou la revendication 2, dans lequel, quand l'information d'estimation estime que le fichier de données devant être estimé n'est pas correctement reçu sur le terminal client (2), une demande de nouvelle acquisition du fichier de données devant être estimé est transmise.

4. Appareil de commande et de surveillance de climatisation (3) selon l'une des revendications 1 à 3, dans lequel l'information d'estimation estime, à des premiers intervalles de temps définissant un moment où l'estimation est réalisée, si le fichier de données devant être estimé est correctement reçu sur le terminal client (2), et si, en conséquence, on estime que le fichier de données devant être estimé n'est pas correctement reçu sur le terminal client (2), réalise l'estimation à des deuxièmes intervalles de temps plus courts que les premiers intervalles de temps.

5. Appareil de commande et de surveillance de climatisation (3) selon l'une des revendications 1 à 4, dans lequel si, en raison de l'estimation, on estime que le fichier de données n'est pas correctement reçu sur le terminal client (2) une fois qu'une période prescrite est passée à partir du moment où on estime que le fichier de données devant être estimé n'est pas correctement reçu sur le terminal client, une erreur est rapportée au terminal client (2).

6. Système de commande et de surveillance de climatisation (1) **caractérisé en ce qu'**il comporte :
un appareil de commande et de surveillance de climatisation (3) selon l'une des revendications 1 à 5 ; et
un terminal client (2) pourvu d'un navigateur (22) qui est relié à l'appareil de commande et de surveillance de climatisation (3) par l'intermédiaire d'un réseau.

7. Procédé de commande et de surveillance de climatisation qui réalise une commande de fonctionnement d'une pluralité de dispositifs de climatisation (4) selon l'une quelconque des revendications 1 à 6 installés dans un bâtiment en fonction d'instructions transmises depuis un terminal client (2) par l'intermédiaire d'un navigateur, qui surveille les états de fonctionnement des dispositifs de climatisation (4), et qui fournit une information d'état de fonctionnement, qui est une information concernant les états de fonctionnement des dispositifs de climatisation (4), au terminal client (2), le procédé de commande et de surveillance de climatisation comportant le fait de :
diviser une fenêtre liée aux états de fonctionnement des dispositifs de climatisation (4), affichés sur le terminal client (2), en une pluralité de zones et stocker, pour chaque zone, de l'information devant être affichée dans cette zone et un fichier de données dans lequel une période de rafraichissement pour l'information affichée est écrite ; et
transmettre, au terminal client (2), les fichiers de données pour toutes les zones constituant la fenêtre quand une demande d'affichage pour la fenêtre est reçue du terminal de client (2),
selon lequel un de la pluralité de fichiers de données contient de l'information d'estimation destinée à estimer si un autre fichier de données peut être correctement reçu sur le terminal client (2), et
le fichier de données contenant l'information d'estimation n'est pas rafraichi, ou bien sa période de rafraichissement est prévue pour être plus longue que la période de rafraichissement du fichier de données devant être estimé.
